# EUROPEAN PATENT SPECIFICATION

(11) **EP 1 628 478 B1**
(45) Date of publication and mention of the grant of the patent: **10.03.2010**
(21) Application number: 04735127.5
(22) Date of filing: 27.05.2004
(51) Int. Cl.: H04N 5/93

(54) **MULTIMEDIA PLAYBACK DEVICE AND PLAYBACK METHOD**
MULTIMEDIA-WIEDERGABEEINRICHTUNG UND WIEDERGABEVERFAHREN
DISPOSITIF ET PROCEDE DE REPRODUCTION MULTIMEDIA

(30) Priority: 27.05.2003 JP 2003149924
(43) Date of publication of application: 22.02.2006
(73) Proprietor: Sony Computer Entertainment Inc., Tokyo 107-0006 (JP); Sony Corporation, Tokyo 141-0001 (JP)
(72) Inventor: MORITA, Toru., c/o Sony Comp. Entertainment Inc., Tokyo 107-0006 (JP); HIRAMATSU, Shuji., c/o Sony Comp. Entertainment Inc, Tokyo 107-0006 (JP); ENOMOTO, Shigeru., c/o Sony Comp. Entertainment Inc., Tokyo 107-0006 (JP); TU, Edgar., c/o Sony Comp. Entertainment America Inc., Foster City, CA 94404 (US)
(74) Representative: Robinson, Nigel Alexander Julian
(86) International application number: PCT/JP2004/007666
(87) International publication number: WO 2004/107753

(56) References cited:
- WO-A1-00/33572
- JP-A- 9 037 181
- JP-A- 10 164 450
- US-A1- 2003 048 309
- US-A1- 2003 064 757

## Description

This invention provides a multimedia reproducing apparatus and a multimedia reproducing method and, more particularly, to a multimedia reproducing apparatus and a multimedia reproducing method, providing a user interface for instructing multimedia reproduction.

### Background Art

Recently, the process of diversification of so-called digital home electrical appliances is proceeding. For example, in recording a television program, a hard disc recorder, a DVD (Digital Versatile Disc) recorder or a composite system thereof, is used. In music reproduction, variegated equipment are used for reproducing compressed data recorded in a large variety of memory cards or hard discs, in addition to apparatus for reproducing conventional CDs (Compact Discs).

Since the digital home electrical appliance, in particular the appliance configured for reproducing pictures or music, is anticipated to be used in common by plural viewers, it is installed in many cases in a common space in a home, such as a living space. Since an operating panel or a controller of a digital home electrical appliance has a smaller number of buttons and a narrow display space, the operating contents are sometimes displayed in a display area different from the main body unit of the appliance, for example, in an area of the television screen. The television screen is viewed from a certain distance, such that movement of a string of fine size letters or characters, or a small-sized pointer, such as is made on a PC viewing surface, is not suited to the display on a television screen. Hence, visual amenity and simple operations are required of the user interface of a digital home electrical appliance employing a television screen. In particular, for a user who is not accustomed to a PC, operating methods routinely used on a PC may not be optimum in handiness.

US-A-2003/048309 discloses a menu display apparatus includes a first display screen on which a plurality of first icons, each representing a selectable item, are sequentially disposed on a main circular arc; and a second display screen on which, of the plurality of first icons, the first icon selected by a user is moved and displayed and a plurality of second icons, each representing a selectable item belonging to the selected first icon, are displayed on the main circular arc. The first display screen and the second display screen are selectively displayed.

### Disclosure of the Invention

In view of the above depicted state of the art, it is an object of the present invention to enhance the convenience on the part of a user in multimedia reproduction.

Various aspects of the invention are set out in the accompanying claims.

The 'contents' herein denotes information contents containing moving pictures, speech or the text, reproduced, displayed or executed through plural sorts of information transmitting means and, in particular, may contain the information for amusements. The 'media' herein may denote means mediating or transmitting the information, such as hard discs, optical discs, memory cards or broadcast networks, or may denote data types, such as data formats or compression formats.

In a multimedia reproducing apparatus, a user selects his/her favorite contents from a large number of contents over plural media types. If these contents are arrayed on the media basis, the result may presumably be a two-dimensional array in which the media and the contents associated with the media are arranged in a matrix configuration. If this large number of contents is displayed on the entire picture image, the two-dimensional array would be onerous to the user. Such is not the case with an embodiment of the present invention in which only one column or row of the media types and only one row or column of the items of the contents associated with a specified media are displayed. Moreover, this display would be suggestive of a two-dimensional expanse of the arrangements of the media types and the items of the contents. Consequently, the present invention provides to the user an intuitive interface in selecting the contents.

The operating unit may acquire a command for scrolling the array in the first direction or the array in the second direction, and a command for reproducing the contents. The display controller may generate picture data of the menu picture image, in keeping with the scroll command, so that, as the point of intersection of the array in the first direction and the array in the second direction is kept unchanged at a preset position, the plural media icons or the plural contents icons are displayed by scrolling. In case of issuance of a command for contents reproduction, the display controller may commence the reproduction of the contents specified by the contents icon positioned in the vicinity of the point of intersection. When the point of intersection of the array in the first direction and the array in the second direction is kept unchanged at a preset position, the contents of interest may be displayed at all times in the preset position, and hence the user may readily comprehend the contents, because he/she does not have to shift his/her viewpoint.

The display controller may generate the picture data of the menu picture image, as the media icon or the contents icon positioned in the vicinity of the point of intersection of the array in the first direction and the array in the second direction is positioned at substantially the center on the picture image. Since the icon of interest is displayed at substantially the center on the picture image, the user needs only to shift his/her viewpoint to the least extent, as when switching is to be made to the menu picture image during reproduction of the contents, and hence the user is able to comprehend the contents easily. In addition, the icon of interest is fixedly positioned at substantially the center on the picture image, so that a large number of the contents may be visually comprehended with the sense of wholeness.

The operating unit may acquire a command pertinent to a position at which the point of intersection of the array in the first direction and the array in the second direction is to be displayed on the picture image, through an operation from a user. The display controller may generate picture data on the menu picture image as the point of intersection is at the position on the picture image relating to the command. This allows the user to set the position of interest more flexibly.

The storage unit may hold data of a thumbnail contracted in size from a frame picture contained in the moving picture data or still picture data as the contents icon specifying the items of the contents. This allows the user to comprehend the contents at a glance. The attribute information, such as title, reproducing time or the data size, may be displayed together in the neighborhood of the thumbnail.

The operating unit may include buttons capable of indicating the up-direction, down-direction, left-direction and the right-direction. When two directions, namely one of the up-direction and the down-direction (first direction) and one of the left-direction and the right-direction (second direction), are indicated simultaneously, the display controller generates picture data of the menu picture image as it prioritizes the scroll display in the first direction or the scroll display in the second direction. This allows prevention of a mistaken operation of a user indicating an oblique direction against his/her intention in case the operating unit used is capable of indicating not only the four directions of the up-direction, down-direction, left-direction and the right-direction, but the oblique directions.

The display output unit may output the contents and picture data of the menu picture image to a television receiver connected outside as a display system. When the television screen is used as a picture image, the user ordinarily is at a certain distance from the screen, in a manner different from the case of a picture image of a PC. Hence, if an interface used for a PC is used as an interface for display on a television screen, it may be feared that hindrances may be produced not only from the visual sense but also from user friendliness. In the present embodiment, such an interface may be provided to the user which, when used for display on a television screen, may allow for facilitated visual recognition of the subject of operation for the user.

In the multimedia reproducing method, according to the present invention, since the media types and the items of the contents related to the specified media are displayed each as one column or row, the display contents on the picture image are not onerous. Additionally, the display may be suggestive of a two-dimensional expanse of the arrangements of the media types and the items of the contents. Thus, the present invention provides an intuitive interface for the user in selecting the contents.

Other objects and more concrete advantages of the present invention will become more apparent from the following explanation of preferred embodiments which will be made with reference to the drawings.

### Brief Description of the Drawings

Fig.1 shows a basic configuration of a multimedia reproducing system.
Fig.2 is a functional block diagram showing the configuration of a multimedia reproducing apparatus.
Fig.3 shows the configuration of a menu picture image generated by the multimedia reproducing apparatus.
Fig.4 shows an example of a picture image showing the functions provided by the multimedia reproducing apparatus by icons.
Fig.5 is a flowchart showing an operational process of the multimedia reproducing apparatus.

### Best Mode for Carrying out the Invention

In the following, a multimedia reproducing system, embodying the present invention, will be explained in detail with reference to the drawings.

A multimedia reproducing system according to the present invention is a composite system capable of reproducing or executing plural contents across plural media, such as still pictures, moving pictures, music, broadcast or games. For a picture image, a screen of a TV receiver is used and, as actuating means, display contents on the picture image and operating buttons of a controller are used. When reproducing plural contents across plural media on a PC, individual programs, such as dedicated viewers, are used for the respective contents. These individual programs are created by different vendors and usually do not own common interfaces. There is no sense of unity among the respective operating methods. If these are unified in a common interface, such as a so-called portal picture image, the result is mere ensemble. Moreover, since much time is taken to launch the respective programs, the user may not feel agreeable in carrying out the operation of program switching.

In the multimedia reproducing system of the present invention, contents reproduction of plural media is unified under a common interface, and common operability is afforded to the user. In addition, delay in the operations in switching between media is eliminated to assure prompt real time switching. An interface which realizes visual acuity and simplified operability to appeal to the user's intuition is provided to enhance the amenity on the part of the user.

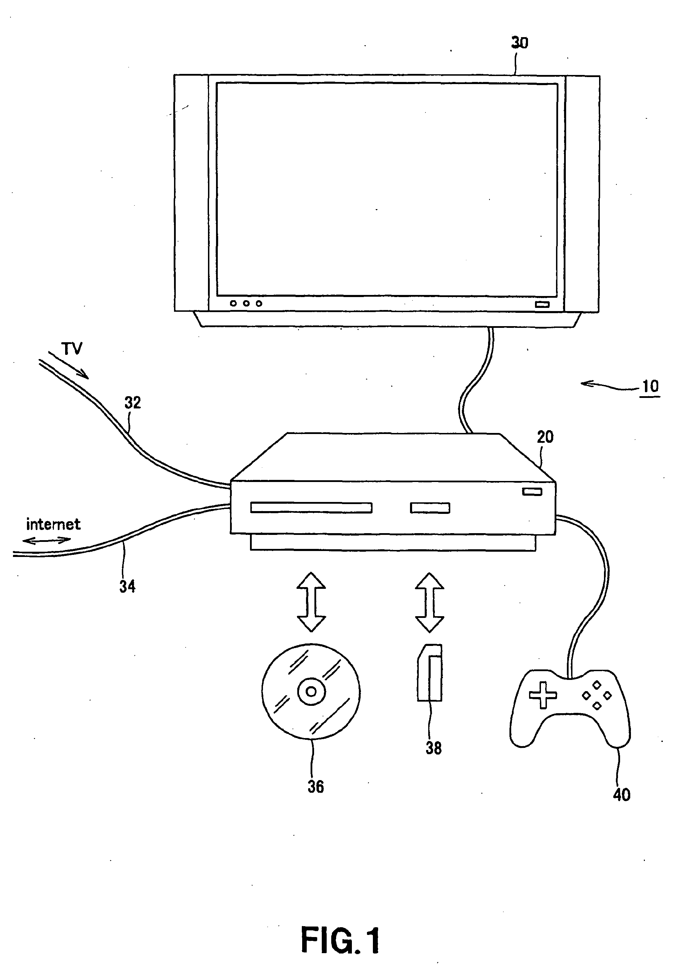

Fig.1 shows a basic configuration of a multimedia reproducing system 10. The functions of the multimedia reproducing system 10 are centered about a multimedia reproducing apparatus 20. To the multimedia reproducing apparatus 20 are connected a television receiver 30 and an operating unit 40. The television receiver 30 has the function of displaying and outputting pictures or the speech, output from the multimedia reproducing apparatus 20, and is externally connected to the multimedia reproducing apparatus 20. The operating unit 40 is a device acted upon by the user to acquire various commands concerning contents reproduction, and operates as a part of the multimedia reproducing apparatus 20. This operating unit 40 may be operated as part of the multimedia reproducing apparatus 20, or may be implemented as a controller for games or as a remote controller used for controlling various functions provided to the multimedia reproducing apparatus 20.

To the multimedia reproducing apparatus 20, the information is supplied via various media. As broadcast contents, program data, such as pictures or speech, are entered over a television network 32 to the multimedia reproducing apparatus 20. The broadcast contents may be recorded by the multimedia reproducing apparatus 20 or may be output to the television receiver 30 through the intermediary of decoding processing carried out by the multimedia reproducing apparatus 20. As for web contents, data on the web are entered to the multimedia reproducing apparatus 20 over a network 34 of the Internet. The web contents may be saved in the multimedia reproducing apparatus 20 or utilized by a variety of functions provided to the multimedia reproducing apparatus 20, such as game functions.

The multimedia reproducing apparatus 20 has a function of reading out data stored in an optical disc 36, such as DVD or CD, and a function of reading out or writing data stored in a removable memory card. The multimedia reproducing apparatus 20 may read in data of a motion picture or a music album from the optical disc 36 or read in data such as images or pictures captured from a memory card 38.

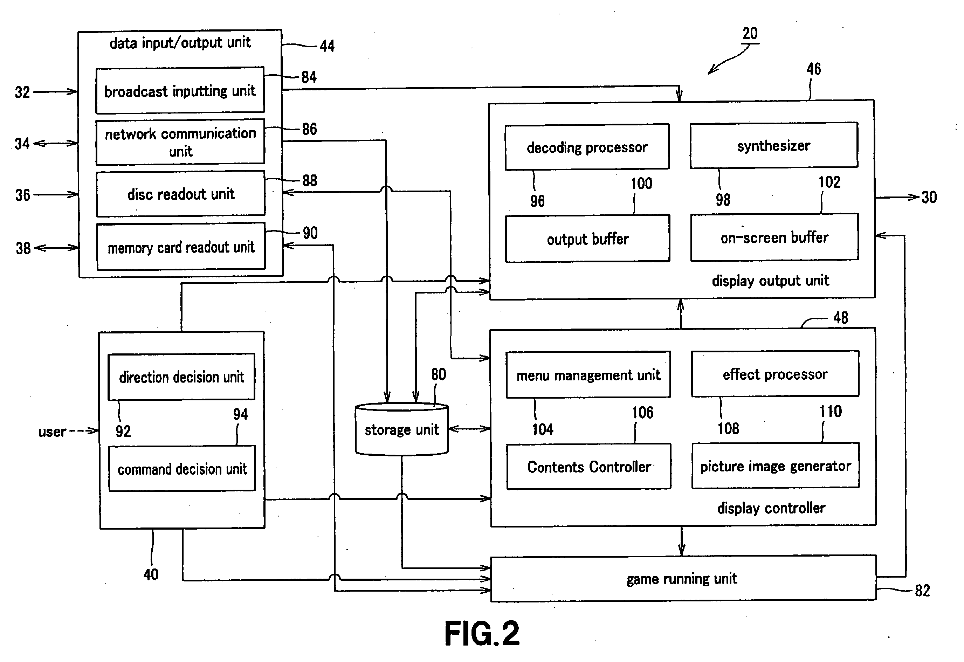

Fig.2 depicts a functional block diagram showing the configuration of a multimedia reproducing apparatus. The multimedia reproducing apparatus 20 includes the operating unit 40, a data input/output unit 44, a display output unit 46, a display controller 48, a storage unit 80 and a game running unit 82. The multimedia reproducing apparatus 20 may be implemented by hardware components, including the CPU, a hard disc, a memory or a rendition circuit of a computer, as long as the hardware structure is concerned, and by programs for realization of various functions, such as data inputting functions, data retention functions, picture image processing functions or rendition functions, as long as the software aspect is concerned. Fig.2 depicts, in a block diagram, the functions realized by the concerted actions of the components or programs. That is, the above functional blocks may be realized in a variety of ways by the combination of hardware and software phases.

The operating unit 40 includes a direction decision unit 92 for acquiring a command for any one of four directions of up, down, left and right, through the user's action, and a command decision unit 94 for acquiring the commands, such as reproduction of contents, stop of reproduction or call for a menu picture image, through user operations. The direction decision unit 92 and the command decision unit 94 are each made up by the combination of plural buttons, circuits for detecting button pressing and programs for recognizing the detection. The buttons provided as the direction decision unit 92 may be cross-keys or joysticks. The commands for oblique directions by the direction decision unit 92 may be of the digital system recognizing the command for the oblique direction by bi-level values, or of the analog system recognizing it with three or more plural values. No matter which of these systems is used, the operating unit 40 deems that, when a command for oblique directions has been acquired, such command is for an up-and-down direction or a left-and-right direction. In the present embodiment, the command for the up-and-down direction is prioritized, such that the command for the oblique direction is deemed to be that for the up-and-down direction.

Out of the buttons, provided as the command decision unit 94, those buttons associated with the call command for a menu picture image are of the toggle system in which display of a menu picture image is switched to non-display of the menu picture image or vice versa each time the button in question is pressed. The information acquired in the respective parts of the operating unit 40 is sent to the display output unit 46, display controller 48 and to the game running unit 82.

The data input/output unit 44 includes a broadcast inputting unit 84, for inputting broadcast contents over the television network 32, a network communication unit 86 for inputting/ outputting data, such as web contents, over the Internet network 34, a disc readout unit 88 for inputting data stored in the optical disc 36, and a memory card readout unit 90 for inputting/ outputting data between it and a memory card 38. The data entered via respective units making up the data input/output unit 44 are sent to the display output unit 46, display controller 48, storage unit 80 and to the game running unit 82.

In the storage unit 80, there are stored contents, such as broadcast contents, supplied over the television network 32, web contents supplied over the Internet network 34, contents, such as music or motion pictures, read in from the optical disc 36 or still pictures as well as moving pictures read in from the memory card readout unit 90. In the storage unit 80, there are further stored data of plural media icons, indicating the types of reproducible media, and data of plural contents icons, indicating the items of respective contents. These media icons and contents icons are used for item demonstration for a menu picture image.

The display output unit 46 includes a decoding processor 96 for decoding encoded data, an output buffer 100 for temporarily storing replay data, which are ready to be output to the television receiver 30, before the replay data are output, an on-screen buffer 102 for temporarily storing picture data for on-screen display demonstration, which are ready to be output to the television receiver 30, before the data are output, and a synthesizer 98 for synthesizing the replay data and the picture data. The decoding processor 96 operates, based on a user's command, acquired by the operating unit 40, to decode the encoded replay data, such as broadcast contents, motion pictures or music, received from the data input/output unit 44 or from the storage unit 80, and to store the decoded data in the output buffer 100. In the on-screen buffer 102 are stored picture data of the menu picture image, generated e.g. by the display controller 48, as picture data for on-screen display. The synthesizer 98 synthesizes the replay data stored in the output buffer 100 and the picture data of the menu picture image, stored in the on-screen buffer 102, and converts the resulting data into analog signals, which are then output to the television receiver 30.

The display controller 48 includes a menu management unit 104, for supervising the media types and the functions provided from one media to another, as menu items, a contents controller 106 for controlling the reproduction or execution of respective contents, an effect processor 108 for processing the movements of icons on the menu picture image, and a picture image generator 110 for generating picture data on the menu picture image. The menu management unit 104 holds on memory the items of contents saved in the storage unit 80 and the items of contents entered via data input/output unit 44, while also holding on memory the media and the contents as now selected. Based on the user's command, as acquired by the operating unit 40, the contents controller 106 controls the reproduction of the media and the contents, data inputting by the data input/output unit 44, data inputting by the storage unit 80 and the processing by the game running unit 82.

The picture image generator 110 generates a menu picture image formed by a horizontal array of plural media icons and a vertical array of plural contents icons. These two arrays intersect each other at a mid part of the picture image and the media icon as well as the contents icon, demonstrated at the point of intersection and in its vicinity are displayed highlighted for distinction from the remaining icons. The effect processor 108 takes charge of scroll display of the media icon array and the contents icon array and highlighted demonstration of media and contents icons of interest. The highlighted demonstration of the icon is realized by the demonstration format different from that for other icons, such as by demonstration with colors different from those of the other icons, color changes, enlarged demonstration of the icons and movements of transition to the ultimate state of demonstration.

The game running unit 82 executes the game program read out from the optical disc 36 by the disc readout unit 88 or the game program read out from the storage unit 80. The game running unit 82 processes the movements of the game program, based on the user's commands, as acquired by the operating unit 40, while sending the pictures and the speech of the game to the display output unit 46.

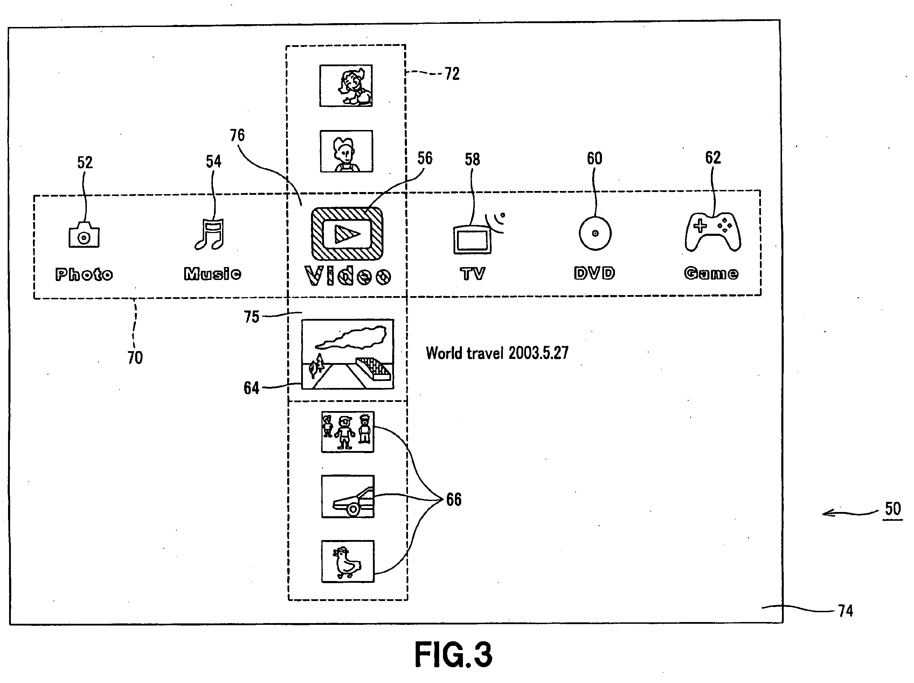

Fig.3 shows the construction of a menu picture image generated by the multimedia reproducing apparatus. On a display picture image 50, there is demonstrated a two-dimensional array comprised of a media icon array 70 made up by plural media icons in the horizontal direction and a contents icon array 72 made up by plural contents icons in the vertical direction and which is intersected by the media icon array. The media icon array 70 includes, as marks specifying the types of the media reproducible by the multimedia reproducing apparatus 20, a photo icon 52, a music icon 54, a moving picture icon 56, a broadcast icon 58, a disc icon 60 and a game icon 62. The contents icon array 72 includes icons, such as thumbnails, of plural contents stored in the storage unit 80. The menu picture image, formed by the media icon array 70 and the contents icon array 72, is an on-screen display, and is demonstrated in superposition on the foreground of the contents picture. When the contents picture, currently being reproduced, is demonstrated in a background area 74, the effect processor 108 may color the entire area of the media icon array 70 and the contents icon array 72, for distinction in appearance from the background area 74, or may otherwise provide for such distinction in appearance, such as by adjusting the brightness of the contents picture.

The media icon, located at the intersection of the media icon array 70 and the contents icon array 72, is displayed to an enlarged scale, in a color different from the color of the other media icons, for illustration as moving picture icon 56. An area of intersection 76 is fixed, as it is kept at a mid portion of the display picture image 50. The media icon array in its entirety is moved in the left-and-right direction, responsive to the user's command for movement in the left-and-right direction, mediated by the operating unit 40, and the media icon, located in the area of intersection 76, is changed in color and icon size. Consequently, the user has only to give direction commands for the left or right direction, while a decision command, such as mouse click on the PC, may be dispensed with.

The effect processor 108 realizes movements of the media icons in the left-and-right direction by scrolling the entire area of the media icon array 70 in the left-and-right direction. Since the media icons, included in the media icon array 70, are carousel-displayed, the user has merely to continue to indicate either the left or the right direction to sequentially display any of the media icons at a mid position of the picture image 50. As long as the media icons is performing leftward or rightward movement, the effect processor 108 displays them with the same color and to the same size and, when the leftward or rightward movement has ceased, such that one of the media icons is ultimately set in position at the area of intersection 76, the effect processor causes the media icon to be changed in color and size. The effect processor 108 may cause the attributes of the colors of the media icons, such brightness, saturation and color hues, or cause the colors to be changed by flickering. By demonstrating the media icon, located at the area of intersection 76 by the display mode different from that for the other media icons, the user may readily select the media.

If the media icons are being moved in the left or right direction such that none of the media icons is located at the area of intersection 76, the effect processor 108 does not display the contents icon array 72. When the media icon of interest is ultimately located in the area of intersection 76, the effect processor displays the contents icon array 72 as it is paid out vertically in an extending fashion beginning from the area of intersection 76. The user has only to scroll the media icons in the left-and-right direction, with the area of intersection 76 as the target point, to permit the user to recognize the contents belonging to the media. In addition, the user may recognize the media from the contents displayed in an extending fashion. If conversely a command for left-and-right operation is issued as the contents icon array 72 is displayed, the effect processor 108 displays the contents icon array 72 so that it is housed from its extended position towards the area of intersection 76.

An area of interest 75, located at a mid portion of the picture image 50, is an area where the icon of the contents, as a target acted upon by the user, remains fixed at the mid portion of the picture image 50. The picture image generator 110 displays the media icon array 70 so that the area of intersection 76 is located in the neighborhood of, more specifically, directly above, the area of interest 75. This area of interest 75 forms a part of the contents icon array 72, and the effect processor 108 displays the contents icon, located in this area of interest 75, to an enlarged scale, as a thumbnail of interest 64. As other contents icons, picture image thumbnails 66 are displayed to a size smaller than the size of the thumbnail of interest 64. In the vicinity of, specifically to the right of, the thumbnail of interest 64, there are displayed a title and the date of recording, as attributes of the picture image of the thumbnail of interest 64.

During the time the operating unit 40 acquires the user's command for the up-and-down direction, the contents icons are moved in the up-and-down direction, responsive to the command. The effect processor 108 realizes the movement in the up-and-down direction of the contents icons by scrolling the area of the contents icon array 72 in its entirety in the up-and-down direction. Since the contents icons, contained in the contents icon array 72, are also carousel-displayed, the user has only to continue to indicated the up-direction or the down-direction to sequentially display the totality of the contents icons on the picture image 50. When the user has commanded an oblique direction to the operating unit 40, the operating unit deems the command to be that for the up-and-down direction, and hence the scroll display of the contents icon array 72 is prioritized, thus prohibiting a mistaken operation that the media is inadvertently changed by scrolling in the left-and-right direction of the media icon array 70 during the time the user is scrolling plural contents.

During the time the contents icons are moved quickly in the up-and-down direction, the effect processor 108 displays these contents icons to the same size. When the movement in the up-and-down has ceased such that the contents icon of interest has ultimately been located in the area of interest 75, the effect processor enlarges the size of the thumbnail of interest 64 which is the contents icon. The effect processor 108 may further change the attributes of the colors, namely the brightness, saturation and color hues, of the thumbnail of interest 64, or display it with flickering. When the operating unit 40 has received a reproduction decision command of the contents, indicated as the thumbnail of interest 64, from the user in this state, the picture image generator 110 halts displaying the picture data of the menu picture image and the contents controller 106 begins to reproduce the so selected contents. If, during contents reproduction, the user has commanded to call the menu picture image, through the operating unit 40, the menu picture image is displayed in superposition on a live picture image of the contents being reproduced. The state under which the decision for reproducing the contents was given is now reproduced on the menu picture image demonstrated at this time.

The picture image generator 110 demonstrates the media icon array 70 in an area slightly above a mid portion along the vertical direction of the picture image 50, while demonstrating the contents icon array 72 in an area slightly shifted towards left from the center along the horizontal direction of the picture image 50. This enables the thumbnail of interest 64 and its attributes to be displayed at a mid portion of the picture image 50. The user is able to see the thumbnail of interest 64 and its attributes at a mid portion of the picture image 50 to comprehend the contents thereof easily.

The photo icon 52 is an icon to be selected when reproducing the picture image stored in the storage unit 80. The picture to be reproduced is mainly a still picture and a moving picture as captured by a digital camera and read in from, for example, a memory card 38. The contents icons, displayed in an extending fashion when the photo icon 52 is located in the area of intersection 76, are thumbnails of still or moving pictures. As attributes, the capturing information, such as date of photographing or the file size, is displayed.

The music icon 54 is an icon to be selected in reproducing music data stored in the storage unit 80. The music data to be reproduced is data read in from e.g. the optical disc 36 and encoded in a specified compression format. The contents icons, displayed in an extended fashion when the music icon 54 is positioned in the area of intersection 76, may be displayed on the musical number basis or on the album basis. As the attributes, the information such as title of the musical number or the album, or the reproducing time, is displayed. The music data may contain moving picture data, such as promotion video of the music number. In this case, the thumbnail of the moving picture may be used as a contents icon.

The moving picture icon 56 is such an icon to be selected in reproducing a recorded picture image stored in the storage unit 80. The picture to be reproduced is a moving picture which has recorded a television program output from the television network 32, or a moving picture captured by a digital video camera, and is encoded in a predetermined compression format. In this case, a thumbnail reduced in size from a frame contained in the moving picture is formed into a contents icon. As attributes, the information such as data of recording or the reproducing time is displayed.

The broadcast icon 58 is an icon to be selected in case of viewing a television program output from the television network 32. The contents icon to be extended as a subject for viewing may be program-based, broadcasting-station-based or broadcasting-channel-based. As the attributes, the information such as name of a broadcasting station, name of a broadcasting channel, program title or the broadcast time, is displayed.

The disc icon 60 is such an icon which should be selected for viewing a picture image or the music stored in the optical disc 36. If a DVD has been recognized as the optical disc 36, the letters 'DVD' are displayed below the media icon and, when a CD has been recognized, the letters 'CD' are displayed below the media icon. If a moving picture is contained in the DVD or in the CD, the thumbnail of such moving picture is formed into a contents icon. If music is stored in the DVD or CD, a mark indicating music or a mark indicating a music number or or the genre of the music number is formed into a contents icon. As attributes, the information such as title of a picture or music or the reproducing time is displayed.

The game icon 62 is such an icon which should be selected for running a game program. The game program stored in the storage unit 80 or the game program read in from the optical disc 36 is executed. If a game icon is contained as data in the game program, such icon is displayed as a contents icon. As attributes, the information such as title of the game program is displayed.

As described above, the multimedia reproducing apparatus 20 displays a menu picture image, composed of an array of media and an array of contents, on the display picture image 50. Although only one row or one column of the media icon array 70 and the contents icon array 72 is actually displayed, the icons of different contents of different media are sequentially displayed by scrolling in the up-and-down direction and in the left-and-right direction. Hence, such a feeling as if many contents are arrayed in a matrix configuration on the entire picture image may be entertained by the user. The user may select contents with such a feeling as if as he/she is moving a matrix comprised of many contents to focuses on a desired one of these contents. However, since the number of icons actually displayed on the picture image is small, no irksome feeling is imparted to the user. The user is able to select the contents one after another simply by instructing one of the upward, downward, left and right directions, and hence is able to perform the so-called zapping operation by a simple and comfortable operation. Since the position of the thumbnail of interest 64 is at approximately the center position of the display picture image 50, at all times, the user is able to select the contents with a feeling as if he/she is peeping into desired contents from a window provided centrally of the display picture image 50. In addition, even in case the user performs operations from a position away from the display picture image 50, he/she is able to comprehend the position of the thumbnail of interest 64 at a glance. Consequently, the user does not have to take the pains of locating the position of the thumbnail of interest 64 in the display picture image 50, such that an environment in which the user may operate with relaxed feeling may be imparted to the user.

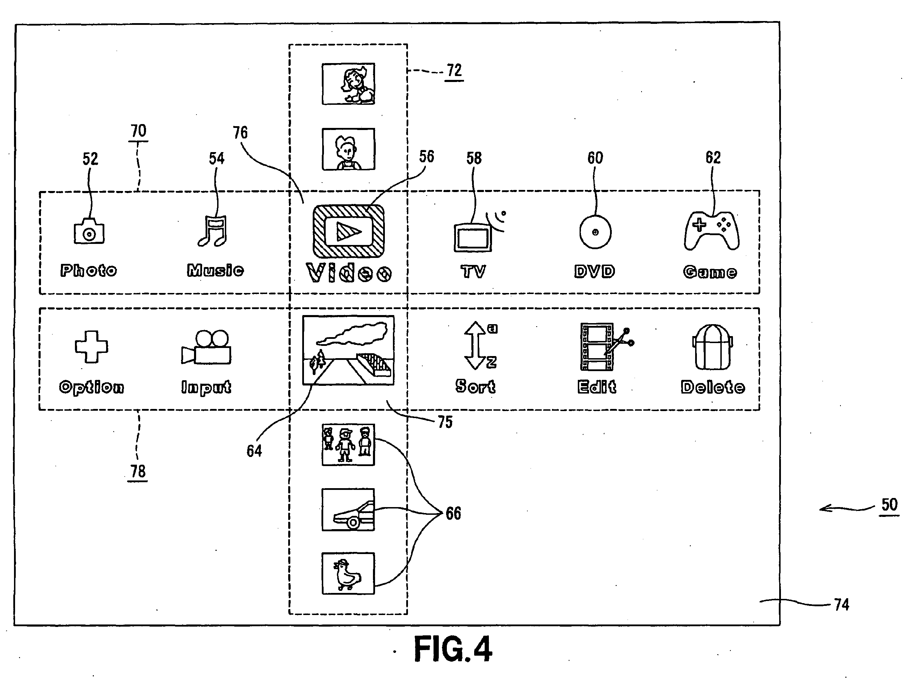

Fig.4 shows a typical picture image in which the functions provided by the multimedia reproducing apparatus are displayed by icons. When the operating unit 40 has acquired a command for calling out the menu of functions that may be executed by the user, in connection with the contents specified by the thumbnail of interest 64, the picture generator 110 demonstrates an array of functional icons 78. The array of functional icons 78 is displayed on the same row as the thumbnail of interest 64, as the array is extended on its left and right sides. This array of functional icons 78 includes, for example, an icon indicating the option setting function, an icon indicating the contents inputting function, an icon indicating the contents re-arraying function, an icon indicating the contents editing function and an icon indicating the contents erasing function.

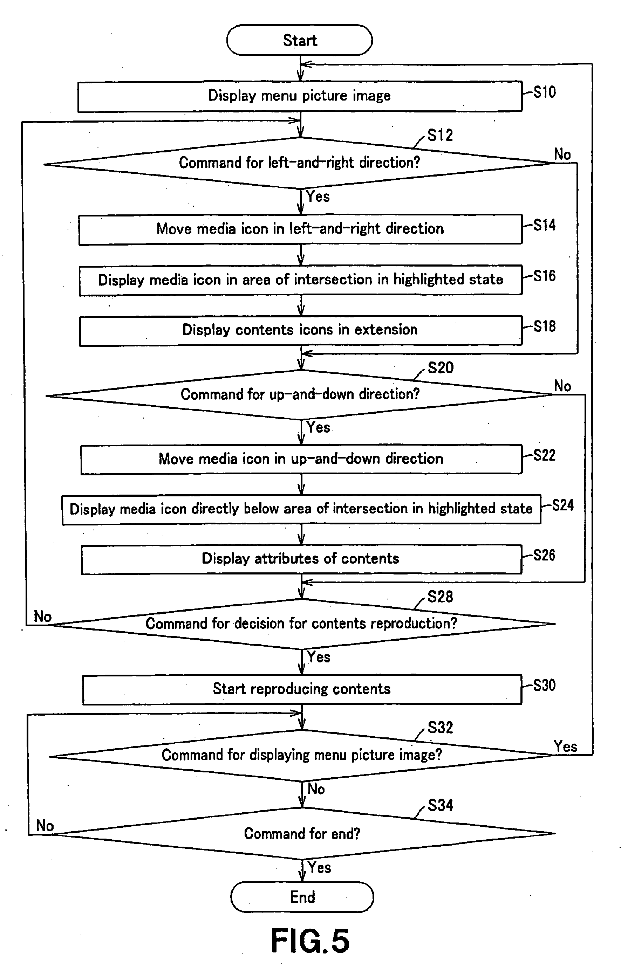

Fig.5 depicts a flowchart showing the operational process for the multimedia reproducing apparatus. When the user has turned on the power supply of the multimedia reproducing apparatus 20, the picture image generator 110 acquires an item, such as media icon or contents icon, to generate a menu picture image, which then is demonstrated by the display output unit 46 on the television receiver 30 (S10). When the operating unit 40 has acquired a direction command towards left or right (S12Y), the effect processor 108 is responsive to the command to cause movement of the media icons towards left or right (S 14). The effect processor also highlights the display of the media icon ultimately positioned in the area of intersection 76 (S16) and acquires the contents icons corresponding to the media from the storage unit 80 to display them as they are extended in the up-and-down direction (S 18). As long as there is no command for the leftward or rightward movement by the user, the steps S 14 to S 18 are skipped (S12N).

When the operating unit 40 has acquired a direction command above or towards below (S20Y), the effect processor 108 is responsive to the command to cause movement of the contents icons towards above or below (S22). The effect processor also highlights the display of the media icon ultimately positioned in the position directly below the area of intersection 76 (S24) and displays the attributes of the contents on the right side (S26). As long as there is no command for the upward or downward movement by the user, the steps S22 to S26 are skipped (S20N).

The processing of the steps S12 to S26 is repeated until the operating unit 40 acquires the contents reproduction decision command (S28N). When the operating unit 40 has acquired the contents reproduction decision command (S28Y), the contents controller 106 commences the reproduction of the contents displayed highlighted directly below the area of intersection 76 (S30). When the operating unit 40 has acquired a command for calling out a menu picture image from the user during contents reproduction (S32Y), the contents controller jumps to S10 to execute the processing of S10 to S28 again. Lacking the command for calling out the menu picture image by the user, the contents reproduction is continued (S32N). If the operating unit 40 has acquired the command for stopping the contents reproduction from the user during contents reproduction, the contents controller 106 stops the contents reproduction (S34Y).

In the foregoing description, a preferred embodiment of the present invention, shown in the drawings, has been explained. However, as may be surmised by those skilled in the art, a large variety of modifications of the constituent elements or process steps may be encompassed in the scope of the invention. Certain ones of these modifications will now be explained.

In the above embodiment, the menu picture image is constructed so that the area of intersection 76 is located directly above the area of interest 75. In a first modification, the menu picture image may be constructed so that the area of intersection 76 is located directly below or in the vicinity of the area of interest 75, provided that position relationships are such that, as the user is gazing at the thumbnail of interest 64, he/she may readily recognize the media icon. Also, in the present embodiment, the media icon array 70 and the contents icon array 72 are displayed in the horizontal and vertical directions on the display picture image 50, respectively. As a further modification, the media icon array 70 and the contents icon array 72 may be demonstrated for extending in respective oblique directions.

In the above explanation, the media icon and the contents icon, located in the area of intersection 76 and in the area of interest 75 in the display picture image 50, respectively, are displayed highlighted. In a further modification, the colors of the icons other than the media icon and the contents icon displayed in the area of intersection 76 and in the area of interest 75 may be changed stepwise from this mid area towards the terminal areas of the display picture image 50 to display the icons at the mid portions of the display picture image 50 in a relatively highlighted fashion. Such stepwise change in the color may be such a change of lowering the brightness or saturation towards the terminal area, or such a change of lowering the α-value at an area of merging to a contents picture being reproduced in the background area 74.

In the above embodiment, the multimedia reproducing apparatus 20 is constructed and arranged so that the area of intersection 76 and the area of interest 75 are positioned at a mid area in the display picture image 50. As a further modification of the present invention, the display positions for the area of intersection 76 and the area of interest 75 may be freely set by the user. That is, although the display positions of the area of intersection 76 and the area of interest 75 are desirably the mid portion of the display picture image 50, such position may be set according to the liking of the user for more flexibly meeting the user's needs.

Several other modifications of the present invention will now be explained. In the above explanation of the present invention, the media icons are selected by scroll command in the up-and-down direction. However, the media icon may ultimately be selected by a definite decision command from the user. Similarly, in the foregoing explanation of the present invention, the contents icons are selected by scroll command in the left-and-right direction. Alternatively, the contents icon may ultimately be selected by a definite decision command from the user.

Likewise, in the foregoing explanation of the present invention, the menu picture image is configured to display the media icon array 70 at all times. Alternatively, the contents icon array 72 may be demonstrated at all times on the menu picture image without demonstrating the media icon array 70, or neither the media icon array 70 nor the contents icon array 72 may be displayed. In these cases, the user may often comprehend which of the media is being displayed if only the thumbnail of interest 64 is displayed at all times. Hence, the configuration of the menu picture image may be flexibly set in keeping with the user's liking.

In the foregoing explanation of the present invention, only the contents of the same row or column as that of the media icon located in the area of intersection 76 are displayed as the contents icon array 72. Alternatively, many contents icons may be arranged in a matrix pattern on the entire display picture image 50 by demonstrating the contents associated with other media, such as all media, on the menu picture image. The contents icons other than those of the contents icon array 72 may be demonstrated in a mode different from the display mode for the contents icon array 72, such as by lowering the brightness or saturation.

The present invention is not limited to the above embodiments explained with reference to the drawings and various changes, substitutions or equivalents may be attempted by those skilled in the art with out departing from the scope of the invention as defined in the claims.

### Industrial Applicability

According to the present invention, it is possible to improve the convenience in use on the part of users in multimedia reproduction.

## Claims

1. A multimedia reproducing apparatus comprising
a storage unit (80) for holding data of a plurality of media icons specifying a plurality of media, contents belonging to said media and data of contents icons specifying said contents;
a display controller (48) for generating picture data displaying plural contents icons belonging to said media icon located at a present position (76), out of the plural media icons (70) arrayed in a first direction, said plural contents icons (72) being arrayed in a second direction and for generating picture data for displaying the contents icon (64) neighboring to said media icon (56) located at said preset position in a highlight fashion; and
a reproduction controller (96) for reproducing contents relating to said contents icon, displayed in the highlighted fashion, responsive to a reproduction command;
said display controller causing movement of the display of said plural media icons, along the array in said first direction, said display controller causing movement of the display of said plural contents icons, along the array in said second direction, responsive to an operational command.

2. The multimedia reproducing apparatus according to claim 1 wherein said display controller generates picture data for displaying said media icon located in a preset position in a highlighted fashion.

3. A multimedia reproducing apparatus according to claim 1, comprising:
an operating unit (40) for acquiring a command concerning reproduction of contents through an operation from a user; and
a display output unit (46) for outputting said picture data as a menu picture image, pertinent to reproduction of said contents, to a display device; wherein
said display controller generates said picture data of said menu picture image in the form of a two-dimensional array of said plural media icons and said plural contents icons, based on the command from said user acquired by said operating unit; and
said display controller arrays said plural contents icons in said second direction intersecting said first direction on said picture image, and generates said picture data on said menu picture image with the media icon and the contents icon positioned in the vicinity of a point of intersection of an array in said first direction and an array in said second direction displayed highlighted for distinction in appearance from the remaining media icons and contents icons.

4. The multimedia reproducing apparatus according to claim 3 wherein said operating unit acquires a command for scrolling the array in said first direction and the array in said second direction and a command for reproducing the contents;
said display controller generating the picture data of said menu picture image in keeping with said scrolling command so that, as said point of intersection of the array in said first direction and the array in said second direction is kept unchanged at a preset position, said plural media icons or said plural contents icons are scroll-displayed; said display controller operating in case of issuance of said command for contents reproduction to commence the reproduction of the contents specified by the contents icon positioned in the vicinity of said point of intersection.

5. The multimedia reproducing apparatus according to claim 3 wherein said display controller generates the picture data of said menu picture image as the media icon or the contents icon positioned in the vicinity of the point of intersection of the array in said first direction and the array in said second direction is positioned at substantially the center on said picture image.

6. The multimedia reproducing apparatus according to claim 3 wherein said operating unit acquires, through an operation from a user, a command pertinent to a position on the picture image at which the point of intersection of the array in said first direction and the array in said second direction is to be displayed on the picture image;
said display controller generating the picture data on said menu picture image as said point of intersection is at said position on the menu picture image relating to said command.

7. The multimedia reproducing apparatus according to claim 3 wherein, in case said contents are moving picture data or still picture data, said storage unit holds data of a thumbnail contracted in size from a frame picture contained in said moving picture data or said still picture data as said contents icon specifying the items of said contents.

8. The multimedia reproducing apparatus according to claim 4 wherein said operating unit includes buttons capable of indicating the up-direction, down-direction, left-direction and the right-direction; and wherein,
when two directions, namely one of the up-direction and the down-direction and one of the left-direction and the right-direction, are indicated simultaneously, said display controller prioritizes the scroll display in said first direction or the scroll display in said second direction to generate the picture data of the menu picture image.

9. The multimedia reproducing apparatus according to claim 3 wherein said display output unit outputs said contents and the picture data of said menu picture image to a television receiver connected outside as said display system.

10. A multimedia reproducing method comprising
generating, from data of a plurality of media icons specifying a plurality of media, contents belonging to said media, and from data of contents icons specifying said contents from one preset unit to another, picture data displaying plural contents icons belonging to said media icon located at a preset position, out of the plural media icons arrayed in a first direction, said plural contents icons being arrayed in a second direction;
generating picture data displaying said contents icon neighboring to said media icon located at said preset position, in a highlighted fashion; and
reproducing contents related to said contents icon, displayed highlighted, responsive to a reproduction command;
wherein the plural media icons move along an array of said first direction, and the plural contents icons move along an array of said second direction, responsive to an operational command.

11. A multimedia reproducing method according to claim 10, comprising the steps of:
acquiring a callout command for a menu picture image generated on two-dimensionally arraying a plurality of media icons specifying the types of media reproducible in connection with reproduction of contents and a plurality of contents icons specifying the items of reproducible contents;
arraying, responsive to said callout command, said plural media icons and said plural contents icons in said first direction on said picture image and in said second direction intersecting said first direction on said menu picture image, respectively, and generating said picture data on said menu picture image with the media icon and the contents icon positioned in the vicinity of a point of intersection of an array in said first direction and an array in said second direction displayed highlighted for distinction in appearance from the remaining media icons and contents icons; and
outputting the picture data of said menu picture image to a display system.

12. The multimedia reproducing method according to claim 11 wherein
said acquiring step acquires, through an action of an operator, a command for scrolling the array in said first direction and the array in said second direction and a command for reproducing the contents;
said generating step generating the picture data of said menu picture image in keeping with said scrolling command so that, as said point of intersection of the array of said first direction and the array of said second direction is kept unchanged at a preset position, said plural media icons or said plural contents icons are scroll-displayed; said generating step in case of issuance of said command for contents reproduction commencing the reproduction of the contents specified by the contents icon positioned in the vicinity of said point of intersection.

13. The multimedia reproducing method according to claim 11 wherein said generating step generates the picture data of said menu picture image as the media icon or the contents icon positioned in the vicinity of the point of intersection of the array in said first direction and the array in said second direction is positioned at substantially the center on said menu picture image.

14. The multimedia reproducing method according to claim 11 wherein said acquiring step acquires a command pertinent to a position on the picture image at which the point of intersection of the array in said first direction and the array in said second direction is to be displayed on the picture image, through an operation by a user;
said generating step generating the picture data on said menu picture image as said point of intersection is at said position on the picture image relating to said command.

15. The multimedia reproducing method according to claim 11 wherein, in case said contents are moving picture data or still picture data, said generating step generates data of a thumbnail contracted in size from a frame picture contained in said moving picture data or said still picture data as said contents icon.

16. The multimedia reproducing method according to claim 12 wherein said acquiring step acquires a command in the up-direction, down-direction, left-direction or the right-direction; and wherein
said generating step when two directions, namely one of the up-direction and the down-direction and one of the left-direction and the right-direction, are indicated simultaneously, prioritizes the scroll display in said first direction or the scroll display in said second direction to generate the picture data of the menu picture image.

17. A computer program for allowing a computer to execute
a function of acquiring a command pertinent to reproduction of contents through an operation by a user;
a function of holding data of a plurality of media icons specifying the types of reproducible media, reproducible contents and data of a plurality of contents icons specifying the items of the contents;
a function of outputting picture data of the menu picture image pertinent to reproduction of said contents to a display system; and
a function of arraying, responsive to said command by the user, said plural media icons and said plural contents icons in a first direction on said picture image and in a second direction intersecting said first direction on said picture image, respectively, for two-dimensionally arraying said plural media icons and said plural contents icons, and generating said picture data on said menu picture image as the media icon and the contents icon positioned in the vicinity of a point of intersection of an array in said first direction and an array in said second direction are displayed highlighted for distinction in appearance from the remaining media icons and contents icons.

18. The computer program according to claim 17 wherein said acquiring function acquires a command for scrolling the array in said first direction or the array in said second direction and a command for reproducing the contents;
said generating function generating the picture data of said menu picture image in keeping with said scrolling command so that, as said point of intersection of the array of said first direction and the array of said second direction is kept unchanged at a preset position, said plural media icons or said plural contents icons are scroll-displayed; said display controller operating, in case of issuance of the command for contents reproduction, for commencing the reproduction of the contents specified by the contents icon positioned in the vicinity of said point of intersection.

19. The computer program according to claim 17 wherein said generating function generates the picture data of said menu picture image as the media icon or the contents icon positioned in the vicinity of the point of intersection of the array in said first direction and the array in said second direction is positioned at substantially the center on said picture image.

20. The computer program according to claim 17 wherein said acquiring function acquires a command pertinent to a position on the picture image at which the point of intersection of the array in said first direction and the array in said second direction is to be displayed, through an operation from a user;
said generating function generating the picture data on said menu picture image as said point of intersection is at said position on the picture image relating to said command.

21. The computer program according to claim 17 wherein, in case said contents are moving picture data or still picture data, said holding function holds data of a thumbnail contracted in size from a frame picture image contained in said moving picture data or said still picture data as said contents icon specifying the items of said contents.

22. The computer program according to claim 18 wherein said acquiring function acquires a command for the up-direction, down-direction, left-direction or the right-direction; and wherein
said generating function when two directions, namely one of the up-direction and the down-direction and one of the left-direction and the right-direction, are indicated simultaneously prioritizes the scroll display in said first direction or the scroll display in said second direction to generate the picture data of the menu picture image.

23. The computer program according to claim 17 wherein said outputting function outputs said contents and the picture data of said menu picture image to a television receiver connected outside as said display system.

24. A computer-readable recording medium having stored therein a computer program for allowing a computer to execute
a function of acquiring a command pertinent to reproduction of contents through an operation by a user;
a function of holding data of a plurality of media icons specifying the types of reproducible media, reproducible contents and data of a plurality of contents icons specifying the items of the contents;
a function of outputting picture data of the menu picture image pertinent to reproduction of said contents to a display system; and
a function of arraying, responsive to said command by the user, said plural media icons and said plural contents in a first direction on said picture image and in a second direction intersecting said first direction on said picture image, respectively, for two-dimensionally arraying said plural media icons and said plural contents icons, and generating picture data on said menu picture image as the media icon and the contents icon positioned in the vicinity of a point of intersection of an array in said first direction and an array in said second direction are displayed highlighted for distinction in appearance from the remaining media icons and contents icons.

25. The recording medium having stored the computer program according to claim 24 wherein said acquiring function acquires a command for scrolling the array in said first direction or the array in said second direction and a command for reproducing the contents;
said generating function generating the picture data of said menu picture image, in keeping with said scrolling command, so that, as said point of intersection of the array of said first direction and the array of said second direction is kept unchanged at a preset position, said plural media icons or said plural contents icons are scroll-displayed; said display controller operating, in case of issuance of the command for contents reproduction, for commencing the reproduction of the contents specified by the contents icon positioned in the vicinity of said point of intersection.

26. The recording medium having stored the computer program according to claim 24 wherein said generating function generates picture data of said menu picture image as the media icon or the contents icon positioned in the vicinity of the point of intersection of the array in said first direction and the array in said second direction is positioned at substantially the center on said picture image.

27. The recording medium having stored the computer program according to claim 24 wherein said acquiring function acquires a command pertinent to a position on the picture image at which the point of intersection of the array in said first direction and the array in said second direction is to be displayed, through an operation from a user;
said generating function generating picture data on said menu picture image as said point of intersection is at said position on the picture image relating to said command.

28. The recording medium having stored the computer program according to claim 24 wherein, in case said contents are moving picture data or still picture data, said holding function holds data of a thumbnail contracted in size from a frame picture contained in said moving picture data or said still picture data as said contents icon specifying items of said contents.

29. The recording medium having stored the computer program according to claim 25 wherein said acquiring function acquires a command for the up-direction, down-direction, left-direction or the right-direction;
said generating function when two directions, namely one of the up-direction and the down-direction and one of the left-direction and the right-direction, are indicated simultaneously, prioritizing the scroll display in said first direction or the scroll display in said second direction to generate picture data of the menu picture image.

30. The recording medium having stored the computer program according to claim 24 wherein said outputting function outputs said contents and the picture data of said menu picture image to a television receiver connected outside as said display system.

## Patentansprüche

1. Multimedia-Wiedergabevorrichtung, welche umfasst:
eine Speichereinheit (80) zum Halten von Daten mehrerer Media-Icons, welche mehrere Media spezifizieren, wobei Inhalte zu den Media gehören und Daten von Inhaltsicons die Inhalte spezifizieren;
eine Anzeigesteuerung (48) zum Erzeugen von Bilddaten, welche mehrere Inhaltsicons anzeigt, welche zu den Media-Icons gehören, welche an einer vorhandenen Position (76) angeordnet sind, von mehreren Media-Icons (70), welche in einer ersten Richtung aufgereiht sind, wobei die mehreren Inhaltsicons (72) in einer zweiten Richtung aufgereiht sind, und zum Erzeugen von Bilddaten, um das Inhaltsicon (64), welches dem Media-Icon (56) benachbart ist, welches an der vorher festgelegten Position angeordnet ist, in einer hervorgehobenen Weise anzuzeigen; und
eine Wiedergabesteuerung (96) zum Wiedergeben von Inhalten in Bezug auf das Inhaltsicon, welches in der hervorgehobenen Weise angezeigt wird, als Antwort auf einen Wiedergabebefehl;
wobei die Anzeigesteuerung Bewegung der Anzeige der mehreren Media-Icons längs der Gruppe in der ersten Richtung veranlasst, wobei die Anzeigesteuerung Bewegung der Anzeige der mehreren Inhaltsicons längs der Gruppe in der zweiten Richtung veranlasst, als Antwort auf einen Betriebsbefehl.

2. Multimedia-Wiedergabevorrichtung nach Anspruch 1, wobei die Anzeigesteuerung Bilddaten erzeugt, um das Media-Icon, welches in einer vorher festgelegten Position angeordnet ist, in einer hervorgehobenen Weise anzuzeigen.

3. Multimedia-Wiedergabevorrichtung nach Anspruch 1, welche umfasst:
eine Betriebseinheit (40) zum Erlangen eines Befehls, der die Wiedergabe von Inhalten betrifft, über eine Betätigung von einem Benutzer; und
eine Anzeigeausgabeeinheit (46) zum Ausgeben der Bilddaten als Menübild-Abbildung, welche zur Wiedergabe der Inhalte Bezug hat, an eine Anzeigeeinrichtung; wobei
die Anzeigesteuerung die Bilddaten der Menübild-Abbildung in Form einer zweidimensionalen Gruppe der mehreren Media-Icons und der mehreren Inhaltsicons erzeugt, auf Basis des Befehls vom Benutzer, der durch die Betriebseinheit erlangt wird; und
wobei die Anzeigesteuerung die mehreren Inhalte in der zweiten Richtung aufreiht, welche die erste Richtung auf der Bild-Abbildung schneidet, und die Bilddaten auf der Menübild-Abbildung mit dem Media-Icon und dem Inhaltsicon erzeugt, welches in der Nähe eines Schnittpunktes einer Gruppe in der ersten Richtung und einer Gruppe in der zweiten Richtung angeordnet ist, welche zur Unterscheidung des Aussehens gegenüber den verbleibenden Media-Icons und Inhaltsicons hervorgehoben angezeigt werden.

4. Multimedia-Wiedergabevorrichtung nach Anspruch 3, wobei die Betriebseinheit einen Befehl, um die Gruppe in der ersten Richtung und die Gruppe in der zweiten Richtung zu rollen, und einen Befehl zum Wiedergeben der Inhalte erlangt;
wobei die Anzeigesteuerung die Bilddaten der Menübild-Abbildung in Kontakt mit dem Rollbefehl erzeugt, so dass, wenn der Schnittpunkt der Gruppe in der ersten Richtung und der Gruppe in der zweiten Richtung bei einer vorher festgelegten Position unverändert gehalten wird, die mehreren Media-Icons oder mehreren Inhaltsicons rollend angezeigt werden; wobei die Anzeigesteuerung in einem Fall einer Ausgabe des Befehls zur Inhaltswiedergabe arbeitet, um die Wiedergabe der Inhalte, welche durch das Inhaltsicon spezifiziert werden, welches in der Nähe des Schnittpunktes positioniert ist, zu beginnen.

5. Multimedia-Wiedergabevorrichtung nach Anspruch 3, wobei die Anzeigesteuerung die Bilddaten der Menübild-Abbildung erzeugt, wenn das Media-Icon oder das Inhaltsicon, welches in der Nähe des Schnittpunktes der Gruppe in der ersten Richtung und in der Gruppe in der zweiten Richtung positioniert ist, bei im Wesentlichen der Mitte der Bild-Abbildung erzeugt wird.

6. Multimedia-Wiedergabevorrichtung nach Anspruch 3, wobei die Betriebseinheit über eine Betätigung von einem Benutzer einen Befehl erlangt, der zu einer Position auf der Bild-Abbildung Bezug hat, bei der der Schnittpunkt der Gruppe in der ersten Richtung und der Gruppe in der zweiten Richtung auf der Bild-Abbildung anzuzeigen ist;
wobei die Anzeigesteuerung die Bilddaten auf der Menübild-Abbildung erzeugt, wenn der Schnittpunkt bei der Position auf der Menübild-Abbildung sich auf den Befehl bezieht.

7. Multimedia-Wiedergabevorrichtung nach Anspruch 3, wobei in dem Fall, dass die Inhalte Bewegtbilddaten oder Standbilddaten sind, die Speichereinheit Daten eines Miniaturbilds, welches bezüglich der Größe zusammengezogen ist, von einem Rahmenbild, welches in den Bewegtbilddaten oder den Standbilddaten enthalten ist, als das Inhaltsicon, welches die Posten der Inhalte spezifiziert, hält.

8. Multimedia-Wiedergabevorrichtung nach Anspruch 4, wobei die Betriebseinheit Tasten aufweist, die in der Lage sind, die Aufwärtsrichtung, die Abwärtsrichtung, die Linksrichtung und die Rechtsrichtung anzuzeigen; und wobei
wenn zwei Richtungen, nämlich eine von der Aufwärtsrichtung und der Abwärtsrichtung und eine von der Linksrichtung und der Rechtsrichtung simultan angezeigt werden, die Anzeigesteuerung die Rollanzeige in der ersten Richtung oder die Rollanzeige in der zweiten Richtung mit Priorität versieht, um die Bilddaten der Menübild-Abbildung zu erzeugen.

9. Multimedia-Wiedergabevorrichtung nach Anspruch 3, wobei die Anzeigeausgabeeinheit die Inhalte und die Bilddaten der Menübild-Abbildung an einen Fernsehempfänger ausgibt, der als Anzeigesystem außen angeschaltet ist.

10. Multimedia-Wiedergabeverfahren, welches umfasst:
Erzeugen, von Daten mehrerer Media-Icons, welche mehrere Media spezifizieren, von Inhalten, welche zu den Media gehören, und von Daten der Inhaltsicon, welche die Inhalte spezifizieren, von einer vorher festgelegten Einheit zur anderen, Bilddaten; welche mehrere Inhaltsicons, welche zu dem Media-Icon gehören, welches an einer vorher festgelegten Position angeordnet ist, unter den mehreren Media-Icons anzeigen, welche in einer ersten Richtung aufgereiht sind, wobei die mehreren Inhaltsicons in einer zweiten Richtung aufgereiht sind;
Erzeugen von Bilddaten, welche das Inhaltsicon anzeigen, welches dem Media-Icon benachbart ist, welches an der vorher festgelegten Position angeordnet ist, in einer hervorgehobenen Weise; und
Wiedergeben von Inhalten in Bezug auf das Inhaltsicon, welches hervorgehoben angezeigt wird, als Antwort auf einen Wiedergabebefehl;
wobei sich die mehreren Media-Icons längs einer Gruppe der ersten Richtung bewegen, und die mehreren Inhaltsicons sich längs einer Gruppe der zweiten Richtung bewegen, als Antwort auf einen Betätigungsbefehl.

11. Multimedia-Wiedergabeverfahren nach Anspruch 10, welches folgende Schritte umfasst:
Erlangen eines Aufforderungsbefehls nach einer Menübild-Abbildung, welche bei zweidimensionalem Aufreihen mehrerer Media-Icons erzeugt wird, welche die Arten von Media spezifizieren, welche in Verbindung mit der Wiedergabe von Inhalten reproduzierbar sind, und mehrerer Inhaltsicons, welche die Posten von reproduzierbaren Inhalten spezifizieren;
Aufreihen, als Antwort auf den Aufforderungsbefehl, der mehreren Media-Icons und der mehreren Inhaltsicons in der ersten Richtung auf der Bild-Abbildung bzw. in der zweiten Richtung, welche die erste Richtung auf der Menübild-Abbildung schneidet, und Erzeugen der Bilddaten auf der Menübild-Abbildung mit dem Media-Icon und dem Inhaltsicon, welches in der Nähe eines Schnittpunktes einer Gruppe in der ersten Richtung positioniert ist, und einer Gruppe der zweiten Richtung, welche zur Unterscheidung des Aussehens hervorgehoben angezeigt wird, gegenüber den verbleibenden Media-Icons und den Inhaltsicons; und
Ausgeben der Bilddaten der Menübild-Abbildung an ein Anzeigesystem.

12. Multimedia-Wiedergabeverfahren nach Anspruch 11, wobei
der Erlangungsschritt über eine Aktion einer Bedienungsperson einen Befehl erlangt, um die Gruppe in der ersten Richtung und die Gruppe in der zweiten Richtung zu rollen, und einen Befehl, um die Inhalte wiederzugeben;
wobei der Erzeugungsschritt die Bilddaten der Menübild-Abbildung erzeugt, wobei mit dem Rollbefehl in Kontakt geblieben wird, so dass, wenn der Schnittpunkt der Gruppe der ersten Richtung und der Gruppe der zweiten Richtung bei einer vorher festgelegten Position unverändert bleibt, die mehreren Media-Icons oder die mehreren Inhaltsicons rollend angezeigt werden; wobei der Erzeugungsschritt im Fall einer Ausgabe des Befehls auf Inhaltswiedergabe die Wiedergabe der Inhalte beginnt, welche durch das Inhaltsicon spezifiziert werden, welches in der Nähe des Schnittpunktes positioniert ist.

13. Multimedia-Wiedergabeverfahren nach Anspruch 11, wobei der Erzeugungsschritt die Bilddaten der Menübild-Abbildung als das Media-Icon oder als das Inhaltsicon, welches in der Nähe des Schnittpunktes der Gruppe positioniert ist, in der ersten Richtung erzeugt, und die Gruppe in der zweiten Richtung bei im Wesentlichen der Mitte auf der Menübild-Abbildung positioniert ist.

14. Multimedia-Wiedergabeverfahren nach Anspruch 11, wobei der Erlangungsschritt einen Befehl erlangt, der mit einer Position auf der Bild-Abbildung Bezug hat, bei der der Schnittpunkt der Gruppe in der ersten Richtung und der Gruppe in der zweiten Richtung auf dem Bild-Abbild anzuzeigen ist, durch eine Betätigung durch einen Benutzer;
wobei der Erzeugungsschritt die Bilddaten auf der Menübild-Abbildung erzeugt, wenn der Schnittpunkt bei der Position auf der Bild-Abbildung sich auf die Befehle bezieht.

15. Multimedia-Wiedergabeverfahren nach Anspruch 11, wobei in dem Fall, wo die Inhalte Bewegtbilddaten oder Standbilddaten sind, der Erzeugungsschritt Daten eines Miniaturbilds, welches bezüglich der Größe zusammengezogen ist, von einem Rahmenbild, welches in den Bewegtbilddaten oder den Standbilddaten enthalten ist, als das Inhaltsicon erzeugt.

16. Multimedia-Wiedergabeverfahren nach Anspruch 12, wobei der Erlangungsschritt einen Befehl in der Aufwärtsrichtung, der Abwärtsrichtung, der Linksrichtung oder der Rechtsrichtung erlangt; und wobei
der Erzeugungsschritt, wenn zwei Richtungen, nämlich eine von der Aufwärtsrichtung und der Abwärtsrichtung und eine von der Linksrichtung oder der Rechtsrichtung simultan angezeigt werden, der Rollanzeige in der ersten Richtung oder die Rollanzeige in der zweiten Richtung Priorität verleiht, um die Bilddaten der Menübild-Abbildung zu erzeugen.

17. Computerprogramm, um zuzulassen, dass ein Computer ausführt:
eine Funktion zum Erlangen eines Befehls, der zur Wiedergabe von Inhalten Bezug hat, über eine Betätigung durch einen Benutzer;
eine Funktion zum Halten von Daten mehrerer Media-Icons, welche die Arten reproduzierbarer Media, reproduzierbarer Inhalte und Daten von mehreren Inhaltsicons, welche die Posten der Inhalte spezifizieren, spezifizieren;
eine Funktion zum Ausgeben von Bilddaten der Menübild-Abbildung, welche zur Wiedergabe der Inhalte gehören, an ein Anzeigesystem; und
eine Funktion zum Aufreihen als Antwort auf den Befehl durch den Benutzer der mehreren Media-Icons und der mehreren Inhaltsicons in einer ersten Richtung auf der Bild-Abbildung bzw. in einer zweiten Richtung, welche die erste Richtung schneidet, auf der Bild-Abbildung, um die mehreren Media-Icons und die mehrere Inhaltsicons zweidimensional aufzureihen, und zum Erzeugen der Bilddaten auf der Menübild-Abbildung, wenn das Media-Icon und das Inhaltsicon, welche in der Nähe eines Schnittpunktes einer Gruppe in der ersten Richtung und einer Gruppe in der zweiten Richtung positioniert sind, zur Unterscheidung bezüglich des Aussehens gegenüber den verbleibenden Media-Icons und den Inhaltsicons hervorgehoben angezeigt werden.

18. Computerprogramm nach Anspruch 17, wobei die Erlangungsfunktion einen Befehl zum Rollen der Gruppe in der ersten Richtung oder der Gruppe der zweiten Richtung erlangt; und einen Befehl, um die Inhalte wiederzugeben;
wobei die Erzeugungsfunktion die Bilddaten der Menübild-Abbildung erzeugt, wobei in Kontakt mit dem Rollbefehl geblieben wird, so dass, wenn der Schnittpunkt der Gruppe der ersten Richtung und der Gruppe der zweiten Richtung bei einer vorher festgelegten Position unverändert gehalten wird, die mehreren Media-Icons oder die mehreren Inhaltsicons rollend angezeigt werden; wobei die Anzeigesteuerung im Fall einer Ausgabe des Befehls auf Inhaltswiedergabe arbeitet, um die Wiedergabe der Inhalte, welche durch das Inhaltsicon spezifiziert werden, welches in der Nähe des Schnittpunktes positioniert ist, zu beginnen.

19. Computerprogramm nach Anspruch 17, wobei die Erzeugungsfunktion die Bilddaten des Menübild-Abbilds erzeugt, wenn das Media-Icon oder das Inhaltsicon, welches in der Nähe des Schnittpunktes der Gruppe in der ersten Richtung positioniert ist, und der Gruppe in der zweiten Richtung, bei im Wesentlichen der Mitte auf der Bild-Abbildung positioniert ist.

20. Computerprogramm nach Anspruch 17, wobei die Erlangungsfunktion einen Befehl erlangt, der zu einer Position auf der Bild-Abbildung gehört, bei dem der Schnittpunkt der Gruppe in der ersten Richtung und der Gruppe in der zweiten Richtung anzuzeigen ist, über eine Betätigung von einem Benutzer;
wobei die Erzeugungsfunktion die Bilddaten auf der Menübild-Abbildung erzeugt, wenn der Schnittpunkt bei der Position auf der Bild-Abbildung sich auf den Befehl bezieht.

21. Computerprogramm nach Anspruch 17, wobei in dem Fall, dass die Inhalte Bewegtbilddaten oder Standbilddaten sind, die Haltefunktion Daten eines Miniaturbilds hält, welches bezüglich der Größe zusammengezogen ist, von einer Rahmenbild-Abbildung, welches in den Bewegtbilddaten oder den Standbilddaten enthalten ist, als das Inhaltsicon, welches die Posten der Inhalte spezifiziert.

22. Computerprogramm nach Anspruch 18, wobei die Erlangungsfunktion einen Befehl für die Aufwärtsrichtung, die Abwärtsrichtung, die Linksrichtung oder die Rechtsrichtung erlangt; und wobei
die Erzeugungsfunktion, wenn zwei Richtungen, nämlich eine von der Aufwärtsrichtung und der Abwärtsrichtung und eine von der Linksrichtung und der Rechtsrichtung simultan angezeigt werden, der Rollanzeige in der ersten Richtung oder die Rollanzeige in der zweiten Richtung Priorität verleiht, um die Bilddaten der Menübild-Abbildung zu erzeugen.

23. Computerprogramm nach Anspruch 17, wobei die Ausgabefunktion die Inhalte und die Bilddaten der Menübild-Abbildung an einen Fernsehempfänger ausgibt, der außen als Anzeigesystem angeschaltet ist.

24. Computer-lesbares Aufzeichnungsmedium, auf welchem ein Computerprogramm gespeichert ist, um zuzulassen, dass ein Computer ausführt:
eine Funktion zum Erlangen eines Befehls, der zur Wiedergabe von Inhalten Bezug hat, über eine Betätigung durch einen Benutzer;
eine Funktion zum Halten von Daten mehrerer Media-Icons, welche die Arten reproduzierbarer Media, reproduzierbarer Inhalte und Daten von mehreren Inhaltsicons, welche die Posten der Inhalte spezifizieren, spezifizieren;
eine Funktion zum Ausgeben von Bilddaten der Menübild-Abbildung, welche zur Wiedergabe der Inhalte gehören, an ein Anzeigesystem; und
eine Funktion zum Aufreihen als Antwort auf den Befehl durch den Benutzer der mehreren Media-Icons und der mehreren Inhaltsicons in einer ersten Richtung auf der Bild-Abbildung bzw. in einer zweiten Richtung, welche die erste Richtung schneidet, auf der Bild-Abbildung, um die mehreren Media-Icons und die mehreren Inhaltsicons zweidimensional aufzureihen, und zum Erzeugen der Bilddaten auf der Menübild-Abbildung, wenn das Media-Icon und das Inhaltsicon, welche in der Nähe eines Schnittpunktes einer Gruppe in der ersten Richtung und einer Gruppe in der zweiten Richtung positioniert sind, zur Unterscheidung bezüglich des Aussehens gegenüber den verbleibenden Media-Icons und den Inhaltsicons hervorgehoben angezeigt werden.

25. Aufzeichnungsmedium, auf welchem das Computerprogramm nach Anspruch 24 gespeichert ist, wobei die Erlangungsfunktion einen Befehl zum Rollen der Gruppe in der ersten Richtung oder der Gruppe in der zweiten Richtung und einen Befehl zum Wiedergeben der Inhalte erlangt;
wobei die Erzeugungsfunktion die Bilddaten der Menübild-Abbildung erzeugt, wobei in Kontakt mit dem Rollbefehl geblieben wird, so dass, wenn der Schnittpunkt der Gruppe der ersten Richtung und der Gruppe der zweiten Richtung bei einer vorher festgelegten Position unverändert gehalten wird, die mehreren Media-Icons oder die mehreren Inhaltsicons rollend angezeigt werden; wobei die Anzeigesteuerung im Fall einer Ausgabe des Befehls auf Inhaltswiedergabe arbeitet, um die Wiedergabe der Inhalte, welche durch das Inhaltsicon spezifiziert werden, welches in der Nähe des Schnittpunktes positioniert ist, zu beginnen.

26. Aufzeichnungsmedium, welches das Computerprogramm nach Anspruch 24 gespeichert hat, wobei die Erzeugungsfunktion die Bilddaten des Menübild-Abbilds erzeugt, wenn das Media-Icon oder das Inhaltsicon, welches in der Nähe des Schnittpunktes der Gruppe in der ersten Richtung positioniert ist, und der Gruppe in der zweiten Richtung, bei im Wesentlichen der Mitte auf der Bild-Abbildung positioniert ist.

27. Aufzeichnungsmedium, welches das Computerprogramm nach Anspruch 24 speichert, wobei die Erlangungsfunktion einen Befehl erlangt, der zu einer Position auf der Bild-Abbildung gehört, bei dem der Schnittpunkt der Gruppe in der ersten Richtung und der Gruppe in der zweiten Richtung anzuzeigen ist, über eine Betätigung von einem Benutzer;
wobei die Erzeugungsfunktion die Bilddaten auf der Menübild-Abbildung erzeugt, wenn der Schnittpunkt bei der Position auf der Bild-Abbildung sich auf den Befehl bezieht.

28. Aufzeichnungsmedium, welches das Computerprogramm nach Anspruch 24 gespeichert hat, wobei in dem Fall, dass die Inhalte Bewegtbilddaten oder Standbilddaten sind, die Haltefunktion Daten eines Miniaturbilds hält, welches bezüglich der Größe zusammengezogen ist, von einer Rahmenbild-Abbildung, welches in den Bewegtbilddaten oder den Standbilddaten enthalten ist, als das Inhaltsicon, welches die Posten der Inhalte spezifiziert.

29. Aufzeichnungsmedium, welches das Computerprogramm nach Anspruch 25 gespeichert hat, wobei die Erlangungsfünktion einen Befehl für die Aufwärtsrichtung, die Abwärtsrichtung, die Linksrichtung oder die Rechtsrichtung erlangt; und wobei
die Erzeugungsfunktion, wenn zwei Richtungen, nämlich eine von der Aufwärtsrichtung und der Abwärtsrichtung und eine von der Linksrichtung und der Rechtsrichtung simultan angezeigt werden, der Rollanzeige in der ersten Richtung oder die Rollanzeige in der zweiten Richtung Priorität verleiht, um die Bilddaten der Menübild-Abbildung zu erzeugen.

30. Aufzeichnungsmedium, welches das Computerprogramm nach Anspruch 24 gespeichert hat, wobei die Ausgabefunktion die Inhalte und die Bilddaten der Menübild-Abbildung an einen Fernsehempfänger ausgibt; der als Anzeigesystem außen angeschaltet ist.

## Revendications

1. Dispositif de reproduction multimédia comprenant
une unité de mémorisation (80) destinée à contenir les données d'une pluralité d'icônes de média spécifiant une pluralité de médias, le contenu appartenant auxdits médias et les données des icônes de contenu spécifiant ledit contenu ;
un contrôleur d'affichage (48) pour générer des données d'image affichant plusieurs icônes de contenu appartenant à ladite icône de média située dans une position actuelle (76), parmi les plusieurs icônes de média (70) disposées en matrice dans une première direction, lesdites plusieurs icônes de contenu (72) étant disposées en matrice dans une seconde direction et pour générer des données d'images pour afficher l'icône de contenu (64) voisine de ladite icône de média (56) située dans ladite position fixée à l'avance d'une façon en surbrillance ; et
un contrôleur de reproduction (96) pour reproduire le contenu relatif à ladite icône de contenu, affichée de la façon en surbrillance, en réaction à une commande de reproduction ;
ledit contrôleur d'affichage provoquant le mouvement de l'affichage desdits plusieurs icônes de média, le long de la matrice dans ladite première direction, ledit contrôleur d'affichage provoquant le mouvement de l'affichage desdits plusieurs icônes de contenu, le long de la matrice dans ladite seconde direction, en réaction à une commande fonctionnelle.

2. Dispositif de reproduction multimédia selon la revendication 1, dans lequel ledit contrôleur d'affichage génère des données d'images pour afficher ladite icône de média située dans une position fixée à l'avance d'une façon en surbrillance.

3. Dispositif de reproduction multimédia selon la revendication 1, comprenant :
une unité fonctionnelle (40) pour acquérir une commande concernant la reproduction d'un contenu par l'intermédiaire d'une opération d'un utilisateur ; et
une unité de sortie d'affichage (46) pour délivrer en sortie lesdites données d'images sous la forme d'une image de menu, pertinente pour la reproduction dudit contenu, vers un dispositif d'affichage ; dans lequel
ledit contrôleur d'affichage génère lesdites données d'image de ladite image de menu sous la forme d'une matrice bidimensionnelle desdites plusieurs icônes de média et desdites plusieurs icônes de contenu, sur la base de la commande dudit utilisateur acquises par ladite unité fonctionnelle ; et
ledit contrôleur d'affichage dispose en matrice lesdites plusieurs icônes de contenu dans ladite seconde direction coupant ladite première direction sur ladite image, et génère lesdites données d'images sur ladite image de menu avec l'icône de média et l'icône de contenu positionnées au voisinage du point d'intersection d'une matrice dans ladite première direction et d'une matrice dans ladite seconde direction affichées en surbrillance pour en distinguer l'aspect par rapport aux icônes de média et aux icônes de contenu restantes.

4. Dispositif de reproduction multimédia selon la revendication 3, dans lequel ladite unité fonctionnelle effectue l'acquisition d'une commande pour faire défiler la matrice dans ladite première direction et la matrice dans ladite seconde direction et une commande pour reproduire le contenu ;
ledit contrôleur d'affichage générant les données d'images de ladite image de menu en maintenant ladite commande de défilement de sorte que, lorsque ledit point d'intersection de la matrice dans ladite première direction et de la matrice dans ladite seconde direction est maintenu inchangé dans une position fixée à l'avance, lesdites plusieurs icônes de média ou lesdites plusieurs icônes de contenu sont affichées avec défilement ; ledit contrôleur d'affichage fonctionnant en cas de fourniture de ladite commande de reproduction de contenu en commençant la reproduction du contenu spécifié par l'icône de contenu positionnée au voisinage dudit point d'intersection.

5. Dispositif de reproduction multimédia selon la revendication 3, dans lequel ledit contrôleur d'affichage génère les données d'images de ladite image de menu lorsque l'icône de média ou l'icône de contenu positionnée au voisinage du point d'intersection de la matrice dans ladite première direction et de la matrice dans ladite seconde direction est positionnée sensiblement au centre de ladite image.

6. Dispositif de reproduction multimédia selon la revendication 3, dans lequel ladite unité fonctionnelle effectue l'acquisition, par l'intermédiaire d'une opération d'un utilisateur, d'une commande pertinente pour une position sur l'image dans laquelle le point d'intersection de la matrice dans ladite première direction et de la matrice dans ladite seconde direction doit être affiché sur l'image ;
ledit contrôleur d'affichage générant les données d'images sur ladite image de menu lorsque ledit point d'intersection se trouve dans ladite position sur l'image de menu relative à ladite commande.

7. Dispositif de reproduction multimédia selon la revendication 3, dans lequel dans le cas où ledit contenu est constitué de données d'image animée ou de données d'image fixe, ladite unité de mémorisation contient les données d'une miniature de dimensions réduites d'une image de trame contenue dans lesdites données d'image animée ou dans lesdites données d'image fixe en tant que dite icône de contenu spécifiant les éléments dudit contenu.

8. Dispositif de reproduction multimédia selon la revendication 4, dans lequel ladite unité fonctionnelle comporte des touches capables d'indiquer la direction vers le haut, la direction vers le bas, la direction vers la gauche et la direction vers la droite ; et dans lequel,
lorsque deux directions, à savoir une direction parmi la direction vers le haut et la direction vers le bas et une direction parmi la direction vers la gauche et la direction vers la droite, sont indiquées simultanément, ledit contrôleur d'affichage affecte la priorité de l'affichage par défilement dans ladite première direction ou de l'affichage par défilement dans ladite seconde direction pour générer les données d'images de l'image de menu.

9. Dispositif de reproduction multimédia selon la revendication 3, dans lequel ladite unité de sortie d'affichage délivre en sortie ledit contenu et les données d'images de ladite image de menu à un récepteur de télévision connecté extérieurement en tant que dit système d'affichage.

10. Procédé de reproduction multimédia comprenant
la génération, à partir de données d'une pluralité d'icônes de média spécifiant une pluralité de médias, d'un contenu appartenant auxdits médias, et à partir des données des icônes de contenu spécifiant ledit contenu d'une unité fixée à l'avance à une autre, des données d'images affichant plusieurs icônes de contenu appartenant à ladite icône de média située dans une position fixée à l'avance, parmi les plusieurs icônes de média disposées en matrice dans une première direction, lesdites plusieurs icônes de contenu étant disposées en matrice dans une seconde direction ;
la génération de données d'image affichant ladite icône de contenu voisine de ladite icône de média située dans ladite position fixée à l'avance, d'une façon en surbrillance ; et
la reproduction du contenu associé à ladite icône de contenu, affichée en surbrillance, en réaction à une commande de reproduction ;
dans lequel les plusieurs icônes de média se déplacent le long d'une matrice dans ladite première direction, et les plusieurs icônes de contenu se déplacent le long d'une matrice dans ladite seconde direction, en réaction à une commande fonctionnelle.

11. Procédé de reproduction multimédia selon la revendication 10, comprenant les étapes consistant à :
acquérir une commande de référence pour une image de menu générée sur une disposition en matrice bidimensionnelle d'une pluralité d'icônes de média spécifiant les types de média reproductibles en relation avec la reproduction du contenu et une pluralité d'icônes de contenu spécifiant les éléments de contenu reproductibles ;
disposer en matrice, en réaction à ladite commande de référence, lesdites plusieurs icônes de média et lesdites plusieurs icônes de contenu dans ladite première direction sur ladite image et dans ladite seconde direction coupant ladite première direction sur ladite image de menu, respectivement, et générer lesdites données d'images sur ladite image de menu, l'icône de média et l'icône de contenu étant positionnées au voisinage du point d'intersection d'une matrice dans ladite première direction et d'une matrice dans ladite seconde direction affichée en surbrillance pour en distinguer l'aspect par rapport aux icônes de média et aux icônes de contenu restantes ; et
délivrer en sortie les données d'images de ladite image de menu vers un système d'affichage.

12. Procédé de reproduction multimédia selon la revendication 11, dans lequel
ladite étape d'acquisition effectue l'acquisition, par l'intermédiaire de l'action d'un opérateur, d'une commande pour faire défiler la matrice dans ladite première direction et la matrice dans ladite seconde direction et d'une commande pour reproduire le contenu ;
ladite étape de génération générant les données d'images de ladite image de menu en maintenant ladite commande de défilement de sorte que, lorsque ledit point d'intersection de la matrice dans ladite première direction et de la matrice dans ladite seconde direction est maintenu inchangé dans une position fixée à l'avance, lesdites plusieurs icônes de média ou lesdites plusieurs icônes de contenu sont affichées avec défilement ; ladite étape de génération en cas de fourniture de ladite commande de reproduction de contenu commençant la reproduction du contenu spécifié par l'icône de contenu positionnée au voisinage dudit point d'intersection.

13. Procédé de reproduction multimédia selon la revendication 11, dans lequel ladite étape de génération génère des données d'images de ladite image de menu lorsque l'icône de média ou l'icône de contenu positionnée au voisinage du point d'intersection de la matrice dans ladite première direction et de la matrice dans ladite seconde direction est positionnée sensiblement au centre de ladite image de menu.

14. Procédé de reproduction multimédia selon la revendication 11, dans lequel ladite étape d'acquisition effectue l'acquisition d'une commande pertinente pour une position sur l'image à laquelle le point d'intersection de la matrice dans ladite première direction et de la matrice dans ladite seconde direction doit être affiché sur l'image, par l'intermédiaire d'une opération d'un utilisateur ;
ladite étape de génération générant les données d'images sur ladite image de menu lorsque ledit point d'intersection se trouve dans ladite position sur l'image relative à ladite commande.

15. Procédé de reproduction multimédia selon la revendication 11, dans lequel dans le cas où ledit contenu est constitué de données d'image animée ou de données d'image fixe, ladite étape de génération génère les données d'une miniature de dimensions réduites d'une image de trame contenue dans lesdites données d'image animée ou dans lesdites données d'image fixe en tant que dite icône de contenu.

16. Procédé de reproduction multimédia selon la revendication 12, dans lequel ladite étape d'acquisition effectue l'acquisition d'une commande pour la direction vers le haut, la direction vers le bas, la direction vers la gauche ou la direction vers la droite ; et dans lequel,
ladite étape de génération, lorsque deux directions, à savoir une direction parmi la direction vers le haut et la direction vers le bas et une direction parmi la direction vers la gauche et la direction vers la droite, sont indiquées simultanément, affecte la priorité de l'affichage par défilement dans ladite première direction ou de l'affichage par défilement dans ladite seconde direction pour générer les données d'images de l'image de menu.

17. Programme informatique pour permettre à un ordinateur d'exécuter
une fonction d'acquisition d'une commande pertinente pour la reproduction de contenu par l'intermédiaire d'une opération d'un utilisateur ;
une fonction de maintien de données d'une pluralité d'icônes de média spécifiant les types de média reproductibles, de contenu reproductible et de données d'une pluralité d'icônes de contenu spécifiant les éléments du contenu ;
une fonction fournissant en sortie des données d'images de l'image de menu pertinente pour la reproduction dudit contenu vers un système d'affichage ; et
une fonction de disposition en matrice, en réaction à ladite commande de l'utilisateur, desdites plusieurs icônes de média et desdites plusieurs icônes de contenu dans une première direction sur ladite image et dans une seconde direction coupant ladite première direction sur ladite image, respectivement, pour disposer en matrice de façon bidimensionnelle lesdites plusieurs icônes de média et lesdites plusieurs icônes de contenu, et générer lesdites données d'images sur ladite image de menu lorsque l'icône de média et l'icône de contenu positionnées au voisinage du point d'intersection d'une matrice dans ladite première direction et d'une matrice dans ladite seconde direction sont affichées en surbrillance pour en distinguer l'aspect par rapport aux icônes de média et aux icônes de contenu restantes.

18. Programme informatique selon la revendication 17, dans lequel ladite fonction d'acquisition effectue l'acquisition d'une commande pour faire défiler la matrice dans ladite première direction ou la matrice dans ladite seconde direction et une commande pour reproduire le contenu ;
ladite fonction de génération générant les données d'images de ladite image de menu en conservant ladite commande de défilement de sorte que, lorsque ledit point d'intersection de la matrice dans ladite première direction et de la matrice dans ladite seconde direction est maintenu inchangé dans une position fixée à l'avance, lesdites plusieurs icônes de média ou lesdites plusieurs icônes de contenu sont affichées avec défilement ; ledit contrôleur d'affichage fonctionnant, en cas de fourniture de la commande de reproduction de contenu, de manière à commencer la reproduction du contenu spécifié par l'icône de contenu positionnée au voisinage dudit point d'intersection.

19. Programme informatique selon la revendication 17, dans lequel ladite fonction de génération génère les données d'images de ladite image de menu lorsque l'icône de média ou l'icône de contenu positionnée au voisinage du point d'intersection de la matrice dans ladite première direction et de la matrice dans ladite seconde direction est positionnée sensiblement au centre de ladite image.

20. Programme informatique selon la revendication 17, dans lequel ladite fonction d'acquisition effectue l'acquisition d'une commande pertinente pour une position sur l'image à laquelle le point d'intersection de la matrice dans ladite première direction et de la matrice dans ladite seconde direction doit être affiché, par l'intermédiaire d'une opération d'un utilisateur ;
ladite fonction de génération générant les données d'images sur ladite image de menu lorsque ledit point d'intersection se trouve dans ladite position sur l'image relative à ladite commande.

21. Programme informatique selon la revendication 17, dans lequel, dans le cas où ledit contenu est constitué de données d'image animée ou de données d'image fixe, ladite fonction de maintien maintient les données d'une miniature de dimensions réduites d'une image de trame contenue dans lesdites données d'image animée ou dans lesdites données d'image fixe en tant que dite icône de contenu spécifiant les éléments dudit contenu.

22. Programme informatique selon la revendication 18, dans lequel ladite fonction d'acquisition effectue l'acquisition d'une commande pour la direction vers le haut, la direction vers le bas, la direction vers la gauche ou la direction vers la droite ; et dans lequel,
ladite fonction de génération, lorsque deux directions, à savoir une direction parmi la direction vers le haut et la direction vers le bas et une direction parmi la direction vers la gauche et la direction vers la droite, sont indiquées simultanément, affecte la priorité de l'affichage par défilement dans ladite première direction ou de l'affichage par défilement dans ladite seconde direction pour générer les données d'images de l'image de menu.

23. Programme informatique selon la revendication 17, dans lequel ladite fonction de sortie délivre en sortie ledit contenu et les données d'images de ladite image de menu à un récepteur de télévision connecté extérieurement en tant que dit système d'affichage.

24. Support d'enregistrement lisible par un ordinateur dans lequel est enregistré un programme informatique pour permettre à un ordinateur d'exécuter
une fonction d'acquisition d'une commande pertinente pour la reproduction de contenu par l'intermédiaire d'une opération d'un utilisateur ;
une fonction de maintien de données d'une pluralité d'icônes de média spécifiant les types de média reproductibles, de contenu reproductible et de données d'une pluralité d'icônes de contenu spécifiant les éléments du contenu ;
une fonction fournissant en sortie des données d'images de l'image de menu pertinente pour la reproduction dudit contenu vers un système d'affichage ; et
une fonction de disposition en matrice, en réaction à ladite commande de l'utilisateur, desdites plusieurs icônes de média et desdits plusieurs contenus dans une première direction sur ladite image et dans une seconde direction coupant ladite première direction sur ladite image, respectivement, pour disposer en matrice de façon bidimensionnelle lesdites plusieurs icônes de média et lesdites plusieurs icônes de contenu, et générer lesdites données d'images sur ladite image de menu lorsque l'icône de média et l'icône de contenu positionnées au voisinage du point d'intersection d'une matrice dans ladite première direction et d'une matrice dans ladite seconde direction sont affichées en surbrillance pour en distinguer l'aspect par rapport aux icônes de média et aux icônes de contenu restantes.

25. Support d'enregistrement sur lequel est enregistré le programme informatique selon la revendication 24, dans lequel ladite fonction d'acquisition effectue l'acquisition d'une commande pour faire défiler la matrice dans ladite première direction ou la matrice dans ladite seconde direction et une commande pour reproduire le contenu ;
ladite fonction de génération générant les données d'images de ladite image de menu en conservant ladite commande de défilement de sorte que, lorsque ledit point d'intersection de la matrice dans ladite première direction et de la matrice dans ladite seconde direction est maintenu inchangé dans une position fixée à l'avance, lesdites plusieurs icônes de média ou lesdites plusieurs icônes de contenu sont affichées avec défilement ; ledit contrôleur d'affichage fonctionnant, en cas de fourniture de la commande de reproduction de contenu, de manière à commencer la reproduction du contenu spécifié par l'icône de contenu positionnée au voisinage dudit point d'intersection.

26. Support d'enregistrement sur lequel est enregistré le programme informatique selon la revendication 24, dans lequel ladite fonction de génération génère les données d'images de ladite image de menu lorsque l'icône de média ou l'icône de contenu positionnée au voisinage du point d'intersection de la matrice dans ladite première direction et de la matrice dans ladite seconde direction est positionnée sensiblement au centre de ladite image.

27. Support d'enregistrement sur lequel est enregistré le programme informatique selon la revendication 24, dans lequel ladite fonction d'acquisition effectue l'acquisition d'une commande pertinente pour une position sur l'image à laquelle le point d'intersection de la matrice dans ladite première direction et de la matrice dans ladite seconde direction doit être affiché, par l'intermédiaire d'une opération d'un utilisateur ;
ladite fonction de génération générant les données d'images sur ladite image de menu lorsque ledit point d'intersection se trouve dans ladite position sur l'image relative à ladite commande.

28. Support d'enregistrement sur lequel est enregistré le programme informatique selon la revendication 24, dans lequel, dans le cas où ledit contenu est constitué de données d'image animée ou de données d'image fixe, ladite fonction de maintien maintient les données d'une miniature de dimensions réduites d'une image de trame contenue dans lesdites données d'image animée ou dans lesdites données d'image fixe en tant que dite icône de contenu spécifiant les éléments dudit contenu.

29. Support d'enregistrement sur lequel est enregistré le programme informatique selon la revendication 25, dans lequel ladite fonction d'acquisition effectue l'acquisition d'une commande pour la direction vers le haut, la direction vers le bas, la direction vers la gauche ou la direction vers la droite ;
ladite fonction de génération, lorsque deux directions, à savoir une direction parmi la direction vers le haut et la direction vers le bas et une direction parmi la direction vers la gauche et la direction vers la droite, sont indiquées simultanément, affecte la priorité de l'affichage par défilement dans ladite première direction ou de l'affichage par défilement dans ladite seconde direction pour générer les données d'images de l'image de menu.

30. Support d'enregistrement sur lequel est enregistré le programme informatique selon la revendication 24, dans lequel ladite fonction de sortie délivre en sortie ledit contenu et les données d'images de ladite image de menu à un récepteur de télévision connecté extérieurement en tant que dit système d'affichage.
